# EUROPÄISCHE PATENTSCHRIFT

(11) **EP 3 056 774 B1**
(45) Veröffentlichungstag und Bekanntmachung des Hinweises auf die Patenterteilung: **27.12.2017**
(21) Anmeldenummer: 15154836.9
(22) Anmeldetag: 12.02.2015
(51) Int. Cl.: F16H 63/18

(54) **Schaltanordnung für ein Kraftfahrzeuggetriebe und Schaltverfahren**
Shifting assembly for a transmission unit for motor vehicles and shifting method
Système de changement de vitesse pour boîte de vitesses de véhicule automobile et procédé de changement de vitesse

(43) Veröffentlichungstag der Anmeldung: 17.08.2016
(73) Patentinhaber: GETRAG B.V. & Co. KG, 74199 Untergruppenbach (DE)
(72) Erfinder: Schaller, Martin, 64732 Bad König (DE)
(74) Vertreter: Witte, Weller & Partner Patentanwälte mbB

(56) Entgegenhaltungen:
- DE-A1- 10 128 854
- DE-A1-102012 221 143
- US-A1- 2010 218 630
- DATABASE WPI Week 200927 Thomson Scientific, London, GB; AN 2009-G52268 XP002743140, -& KR 2009 0021448 A (DAEWOO S&T CO LTD) 4. März 2009 (2009-03-04)

## Beschreibung

Die vorliegende Erfindung betrifft eine Schaltanordnung für ein Kraftfahrzeuggetriebe, das wenigstens zwei Schaltkupplungspakete zum Ein- und Auslegen von Gangstufen aufweist, mit einer Schaltwalzenanordnung, die für jedes Schaltkupplungspaket eine Schaltkontur aufweist, die mit einem Mitnehmer in Eingriff steht, der mit dem Schaltkupplungspaket gekoppelt ist, und mit einer Aktuatoranordnung zum Antreiben der Schaltwalzenanordnung.

Ferner betrifft die vorliegende Erfindung ein Verfahren zum Durchführen eines Gangwechsels in einem Kraftfahrzeuggetriebe unter Verwendung einer derartigen Schaltanordnung.

Auf dem Gebiet der Kraftfahrzeuggetriebe in Form von Stirnradgetrieben ist es bekannt, Gangstufenwechsel mittels einer Schaltanordnung durchzuführen. Den Gangstufen sind in der Regel hierbei Zahnradpaare zugeordnet, von denen eines als Losrad ausgebildet ist. Das Losrad ist mittels einer Schaltkupplung mit einer zugeordneten Welle verbindbar, um einen Leistungsfluss über die Zahnradpaarung einzurichten. Häufig werden zwei derartige Schaltkupplungen zu einem sogenannten Schaltkupplungspaket zusammengefasst. Dieses weist dann in der Regel eine zentrale Schaltmuffe auf, die in einer axialen Schaltrichtung eine Gangstufe einlegt, und in der entgegengesetzten Schaltrichtung eine weitere Gangstufe alternativ einlegt. Die Schaltkupplungen, die in derartigen Schaltkupplungspaketen integriert sind, sind häufig als sogenannte Synchron-Schaltkupplungen realisiert. Hierbei kann durch einen Reibeingriff zwischen miteinander zu synchronisierenden Elementen (Losrad bzw. Welle) eine weitgehende Drehzahlanpassung erreicht werden, bevor eine in Umfangsrichtung formschlüssige Verbindung zwischen dem Losrad und der Welle eingerichtet wird, um eine Gangstufe einzulegen.

Bei manuell geschalteten Kraftfahrzeuggetrieben dieser Art sind die Schaltmuffen über Schaltglieder wie Schaltgabeln betätigbar, die wiederum über ein Gestänge, eine Seilzuganordnung oder dergleichen mit einem manuellen Schaltknüppel im Fahrgastinnenraum verbunden sind. Häufig ist hierbei jeder Schaltmuffe, also jedem Schaltkupplungspaket, eine Schaltstange zugeordnet. Ferner ist häufig eine Schaltwelle vorgesehen, die bei Wählbewegungen des Schaltknüppels so bewegt wird, dass jeweils eine der Schaltstangen angewählt wird, und bei Schaltbewegungen des Schaltknüppels so bewegt wird, dass die angewählte Schaltstange bewegt wird.

Bei automatisierten Getrieben ist es bekannt, einen Schaltaktuator zum Durchführen von Schaltbewegungen vorzusehen, sowie einen Wählaktuator zum Durchführen von Wählbewegungen. Die Aktuatoren können elektromechanische Aktuatoren sein, hydraulische Aktuatoren, oder Kombinationen hiervon.

Bei automatisierten Schaltgetrieben ist es auch bekannt, jedem Schaltkupplungspaket einen eigenen Schaltaktuator in Form eines doppelt wirkenden Hydraulikzylinders zuzuordnen. Durch diese Maßnahme können die Schaltkupplungspakete unabhängig voneinander betätigt werden. Dies ist insbesondere bei der Anwendung in sogenannten Doppelkupplungsgetrieben von Bedeutung. Denn hier ist es notwendig, zwei Gangstufen innerhalb eines solchen Doppelkupplungsgetriebes gleichzeitig einzulegen, wobei die zwei Gangstufen unterschiedlichen Teilgetrieben zugeordnet sind. Bei Doppelkupplungsgetrieben ist zudem das klassische H-Schema nicht notwendigerweise implementiert. Mit anderen Worten können einem Schaltkupplungspaket beispielsweise auch nicht benachbarte Gangstufen zugeordnet sein.

Neben hydraulischen Aktuatoranordnungen für Schaltanordnungen sind auch elektromechanische Aktuatoranordnungen bekannt, die in der Regel auf der Basis von Schaltwalzen aufgebaut sind. Als Antriebsmotor dient hier in der Regel ein Elektromotor. Der Elektromotor treibt beispielsweise eine Schaltwalze einer Schaltwalzenanordnung an. Die Schaltwalze weist für jedes Schaltkupplungspaket eine Schaltkontur auf, in die ein Mitnehmer greift, der wiederum mit einem Schaltglied wie einer Schaltgabel zum Betätigen einer Schaltmuffe gekoppelt ist. Die Schaltwalze stellt also einen Rotation-Translation-Wandler dar.

Bei Doppelkupplungsgetrieben ist es auch bekannt, für jedes Teilgetriebe eine eigene Schaltwalze vorzusehen, wobei die Schaltwalzen jeweils mittels eigener Elektromotoren unabhängig voneinander antriebbar sind.

Schaltwalzen leiden generell an dem Problem, dass diese ein rein sequentielles Schalten einrichten. Mehrfach-Gangstufenschaltungen, beispielsweise von Gangstufe fünf in Gangstufe zwei oder dergleichen, sind daher häufig nicht in einer angemessen kurzen Zeit durchführbar, jedenfalls nicht ohne zusätzliche Maßnahmen zu treffen. Ferner steigt mit der Anzahl der Gangstufen in der Regel auch der notwendige Umfang einer solchen Schaltwalze, so dass bei Kraftfahrzeuggetrieben mit sieben oder mehr Vorwärtsgangstufen in der Regel Schaltwalzen mit relativ großen Durchmessern notwendig sind. Dies führt zu einer Vergrößerung des radial erforderlichen Bauraumes. Gerade bei Kraftfahrzeuggetrieben, die längs in ein Kraftfahrzeug eingebaut werden, ist der radiale Bauraum jedoch sehr knapp. Auch bei Front-Quer-Getrieben ist jedoch auf eine radial kompakte Bauweise zu achten.

Ferner sind auch sogenannte Ziehkeilgetriebe bekannt, insbesondere auf dem Gebiet der Motorräder. Hierbei sind Losräder drehbar an einer Hohlwelle gelagert. Ein durch die Welle hindurchgeführter Ziehkeil kann jeweils mit einem der Losräder ausgerichtet werden, um nach der Art einer Klauenkupplung eine formschlüssige Verbindung zwischen der Welle und dem Losrad einzurichten. Beispiele derartiger Ziehkeilgetriebe sind bekannt aus den Dokumenten DE-PS 1 043 122 sowie DE 43 24 264 C1.

Derartige Ziehkeilanordnungen eigenen sich jedoch nicht ohne weiteres für Kraftfahrzeuggetriebe, da die hier zu synchronisierenden Massen sehr viel höher sind, was bei Klauenkupplungen zu schnellem Verschleiß führen kann. Das Dokument KR 2009 0021448 A offenbart eine Schaltanordnung gemäß dem Oberbegriff des Anspruchs 1.

Vor diesem Hintergrund ist es eine Aufgabe der Erfindung, eine verbesserte Schaltanordnung sowie ein verbessertes Schaltverfahren anzugeben, wobei vorzugsweise ein geringer Bauraum, insbesondere ein geringer radialer Bauraum realisierbar ist, wobei vorzugsweise ein nicht sequentielles Schalten realisierbar ist, um Mehrfach-Gangstufenschaltungen in kurzer Zeit durchführen zu können, und/oder wobei generell ein großes Gleichteilepotenzial vorhanden ist.

Diese Aufgabe wird durch eine Schaltanordnung mit den Merkmalen des Anspruchs 1 gelöst.

Ferner wird die obige Aufgabe gelöst durch ein Verfahren zum Durchführen eines Gangstufenwechsels in einem Kraftfahrzeuggetriebe unter Verwendung einer erfindungsgemäßen Schaltanordnung, wobei zur Durchführung des Gangwechsels in einem ersten Schritt eine Schaltscheibe angewählt wird, und anschließend diese Schaltscheibe mittels des einzelnen Schaltmotors verdreht wird, um auf diese Weise das zugeordnete Schaltkupplungspaket zu betätigen.

Bei der erfindungsgemäßen Schaltanordnung beinhaltet jedes Schaltkupplungspaket eine oder zwei Schaltkupplungen, die vorzugsweise als synchronisierte Schaltkupplungen ausgebildet sind. Jede Schaltkupplung ist wenigstens einer Gangstufe des Kraftfahrzeuggetriebes zugeordnet.

Die Schaltscheiben sind vorzugsweise jeweils nach der Art einer Schaltwalze mit einer Schaltkontur ausgebildet, die jeweils einem Schaltkupplungspaket zugeordnet ist, insbesondere genau einem Schaltkupplungspaket zugeordnet ist. Mit anderen Worten wird vorzugsweise jedem Schaltkupplungspaket eine eigene Schaltwalze zugeordnet, die aufgrund der axial kompakten Bauweise vorliegend als Schaltscheibe bezeichnet wird. In die Schaltkontur einer solchen Schaltscheibe greift vorzugsweise ein Mitnehmer, vorzugsweise ein einziger Mitnehmer, der diesem Schaltkupplungspaket zugeordnet ist.

Drehbewegungen der wenigsten zwei Schaltscheiben werden durch einen Schaltmotor in die Wege geleitet. Die Schaltscheiben sind vorzugsweise koaxial zu einer Schaltanordnungsachse ausgerichtet. Der einzelne Schaltmotor ist vorzugsweise ebenfalls koaxial zu der Schaltanordnungsachse angeordnet.

Von besonderem Vorzug ist es, wenn jedem Schaltkupplungspaket eines Kraftfahrzeuggetriebes eine eigene Schaltscheibe zugeordnet ist. Bei einem Getriebe, das beispielsweise sieben Vorwärtsgangstufen und eine Rückwärtsgangstufe aufweist, die durch vier Schaltkupplungspakete schaltbar sind, beinhaltet die Schaltwalzenanordnung folglich vorzugsweise genau vier Schaltscheiben.

Der einzelne Schaltmotor ist über eine Wählanordnung mit den Schaltscheiben gekoppelt, derart, dass der Schaltmotor eine jeweils angewählte Schaltscheibe verdrehen kann, um deren zugeordnetes Schaltkupplungspaket zu betätigen. Eine Schaltkontur an den jeweiligen Schaltscheiben ist vorzugsweise so ausgebildet, dass sie sich über 360° erstreckt und vorzugsweise in Umfangsrichtung durchlaufend ausgebildet ist. Folglich kann die Schaltkontur so ausgebildet sein, dass sie von einer ersten Gangstufenposition eines Schaltkupplungspakets zunächst immer wieder in die Neutralposition versetzt wird, um anschließend in die andere Gangposition versetzt zu werden. Hierbei ist es generell möglich, dass die Schaltscheibe generell nur in einer Drehrichtung angetrieben wird. In diesem Fall ist es von besonderem Vorzug, wenn die Gangstufen, die einem Schaltkupplungspaket zugeordnet sind, jeweils in dem gleichen Teilgetriebe liegen.

Die Aufgabe wird somit vollkommen gelöst.

Gemäß einer besonders bevorzugten Ausführungsform weist die Aktuatoranordnung eine Ziehkeilanordnung auf, die axial in Bezug auf die wenigstens zwei Schaltscheiben bewegbar ist und/oder mit jeweils einer der wenigstens zwei Schaltscheiben in einer Drehrichtung koppelbar ist.

Die Ziehkeilanordnung kann folglich zum Wählen der Schaltscheiben verwendet werden. Die Ziehkeilanordnung ist vorzugsweise mit dem einzelnen Schaltmotor gekoppelt, und zwar vorzugsweise so, dass eine Drehbewegung einer angewählten Schaltscheibe durch Verdrehen der Ziehkeilanordnung realisiert werden kann.

Der Begriff der Ziehkeilanordnung ist vorliegend breit zu verstehen. Insbesondere ist hierbei eine Anordnung zu verstehen, die axial parallel zu der Schaltanordnungsachse ausgerichtet ist, insbesondere koaxial hierzu. Ferner weist die Ziehkeilanordnung ein mechanisches Merkmal auf, mittels dessen ein mechanischer Formschluss in Umfangsrichtung zwischen der Ziehkeilanordnung und einer angewählten Schaltscheibe realisierbar ist. Dies kann ein Finger sein, der in eine Axialnut einer Schaltscheibe eingreift, nach der Art eines Keils und einer Keilnut, um ein Beispiel zu nennen. Das Merkmal kann jedoch auch Umfangsverzahnung beinhalten, eine Passfederanordnung oder dergleichen. Das Merkmal zur Einrichtung eines Formschlusses in Umfangsrichtung kann jedoch auch Kugeln beinhalten, die mittels eines Ziehkeilkopfes radial nach außen drückbar sind, wie es dem Grunde nach aus dem Dokument DE-PS 1 043 122 bekannt geworden ist.

Der Begriff des Ziehkeils ist vorliegend gleichwertig zu verwenden mit dem Begriff eines Schaltkeils. Insbesondere dann, wenn Schaltkupplungen der Schaltkupplungspakete als Synchron-Schaltkupplungen ausgebildet sind, sind die über die Ziehkeilanordnung auf die jeweiligen Schaltscheiben zu übertragenden Umfangskräfte deutlich kleiner als bei Ziehkeilgetrieben, wie sie aus den eingangs genannten Patentdokumenten bekannt geworden sind.

Da der Eingriff zwischen einem Ziehkeilmerkmal und einer Schaltscheibe in der Regel erfolgt, ohne dass eine relative Bewegung zwischen diesen Elementen vorhanden ist, wie beispielsweise bei Ziehkeilgetrieben zwischen Losrad und Welle, ist zudem die Schaltanordnung mit einem geringen Verschleiß behaftet.

Gemäß einer bevorzugten Ausführungsform ist die Ziehkeilanordnung mittels eines Wählmotors axial in Bezug auf die wenigstens zwei Schaltscheiben bewegbar.

Der Wählmotor kann durch einen Hydraulikzylinder gebildet sein, kann jedoch insbesondere gebildet sein durch einen Elektromotor in Kombination mit einem Rotation-Translation-Wandler.

Folglich ist es von besonderem Vorteil, wenn der Wählmotor ein in Drehrichtung antreibender Motor ist, der über einen Wähl-Rotation-Translation-Wandler mit der Ziehkeilanordnung gekoppelt ist.

Der Wähl-Rotation-Translation-Wandler kann auf beliebige Art und Weise aufgebaut sein. Von besonderem Vorzug ist es, wenn er eine Wählscheibe mit einer Wählkontur ist.

Der Wähl-Rotation-Translation-Wandler kann folglich, wie die Schaltscheiben, nach der Art einer Schaltwalze ausgebildet sein, an der eine Wählkontur ausgebildet ist. Die Kontur kann dabei im Bereich von einem Innenumfang der Wählscheibe ausgebildet sein, derart, dass ein Mitnehmer einer Welle der Ziehkeilanordnung in eine solche Wählkontur greift.

Die axiale Breite der Wählscheibe ist vorzugsweise eine Funktion der axialen Breite der Schaltscheiben und deren Abstände. Die Wählscheibe ist vorzugsweise koaxial zu der Schaltscheiben angeordnet.

Die Wählkontur ist vorzugsweise so ausgebildet, dass sie eine axiale Bewegung der Ziehkeilanordnung zwischen sämtlichen Schaltscheiben ermöglicht.

Von besonderem Vorzug ist es, wenn die Wählkontur der Wählscheibe sich über 360° erstreckt.

Die Wählkontur ist dabei in Umfangsrichtung vorzugsweise durchlaufend, so dass es ausreicht, wenn der Wähl-Rotation-Translation-Wandler in einer Drehrichtung angetrieben wird, um alle möglichen Drehpositionen der Wählkontur anzufahren, und folglich um sämtliche Schaltscheiben anzuwählen.

Ferner ist es insgesamt vorteilhaft, wenn der Wählmotor über einen Wähl-Freilauf mit dem Wähl-Rotation-Translation-Wandler gekoppelt ist.

Hierdurch ist es möglich, dass in einer ersten Drehrichtung ein Antriebsglied des Wähl-Rotation-Translation-Wandlers mitgenommen wird. Diese erste Drehrichtung ist folglich eine Wählrichtung. In der zweiten, entgegengesetzten Drehrichtung kann sich der Wählmotor drehen, ohne das Antriebsglied des Wähl-Rotation-Translation-Wandlers mitzunehmen. Die zweite Drehrichtung ist hierbei vorzugsweise eine Schaltrichtung.

Insgesamt ist es bevorzugt, wenn der Schaltmotor ein in Drehrichtung antreibender Motor ist, der mit der Ziehkeilanordnung gekoppelt ist.

Der Schaltmotor kann dabei über ein Aktuatorgetriebe mit der Ziehkeilanordnung gekoppelt sein, kann jedoch auch unmittelbar mit der Ziehkeilanordnung gekoppelt sein, so dass eine Umdrehung des Schaltmotors gleich einer Umdrehung der Ziehkeilanordnung ist.

Dabei ist es von besonderem Vorteil, wenn der Schaltmotor über einen Schalt-Freilauf mit der Ziehkeilanordnung gekoppelt ist.

Der Schalt-Freilauf ist vorzugsweise so angeschlossen, dass in einer zweiten Drehrichtung ein Antriebsglied der Ziehkeilanordnung mitgenommen wird. Hierbei handelt es sich um die Schaltrichtung. In einer ersten, entgegengesetzten Drehrichtung kann der Schaltmotor hingegen drehen, ohne ein Antriebsglied der Ziehkeilanordnung mitzunehmen. Dies ist wiederum die Wählrichtung.

Insbesondere bei der obigen Ausgestaltung mit einem Wähl-Freilauf und/oder einem Schalt-Freilauf ist es möglich, dass der Schaltmotor und der Wählmotor durch einen einzigen Motor gebildet sind.

Bei der erfindungsgemäßen Schaltanordnung kann eine Drehrichtung eines Elektromotors eine axiale Position einer Ziehkeilanordnung bestimmen. Die andere Drehrichtung desselben Elektromotors kann zur Schaltbetätigung verwendet werden. Zur Anpassung der Übersetzungen ist es bevorzugt, wenn zwischen den Elektromotor und der Ziehkeilanordnung ein Untersetzungsgetriebe geschaltet ist, vorzugsweise in Form eines Planetenradsatzes bzw. eines Planetengetriebes.

Insgesamt ergibt sich je nach Ausführungsform eine Schaltanordnung mit einer kompakten radialen Bauweise. Ferner sind vorzugsweise sämtliche Komponenten koaxial zueinander angeordnet, insbesondere der Elektromotor, die Schaltscheiben, ggf. ein Wähl-Rotation-Translation-Wandler und ein Wähl-Freilauf sowie ein Schalt-Freilauf. Auch ein vorgeschaltetes Planetengetriebe kann koaxial zu einer solchen Schaltanordnungsachse angeordnet sein. Insbesondere kann die Schaltanordnung ohne winkellagige Bauweise realisiert werden.

Die Schaltscheiben können als Gleichteile ausgebildet sein. Komplexe Koppel- bzw. Winkelgetriebe können vermieden werden.

Vorzugsweise ist also jede Schaltscheibe über einen Ziehkeil mit einer Welle koppelbar. Die Welle wiederum ist vorzugsweise über einen Schalt-Freilauf und einen Wähl-Freilauf mit einem einzigen Elektromotor verbunden. In einer Drehrichtung des Elektromotors wird der Ziehkeil axial nach links und rechts verfahren, um unter einer Schaltscheibe positioniert zu werden. In der anderen Drehrichtung wird die Schaltscheibe in Umfangsrichtung mitgenommen, um auf diese Weise über deren Schaltkontur ein Schaltkupplungspaket zu betätigen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges für ein Kraftfahrzeug mit einer Ausführungsform einer erfindungsgemäßen Schaltanordnung;
- Fig. 2: eine schematische Darstellung einer Ausführungsform einer Ziehkeilanordnung für eine erfindungsgemäße Schaltanordnung;
- Fig. 3: eine schematische Darstellung einer Schaltscheibe;
- Fig. 4: eine schematische Darstellung einer Wählscheibe;
- Fig. 5: eine schematische Abwicklung einer Schaltscheibe; und
- Fig. 6: eine schematische Abwicklung einer Wählscheibe.

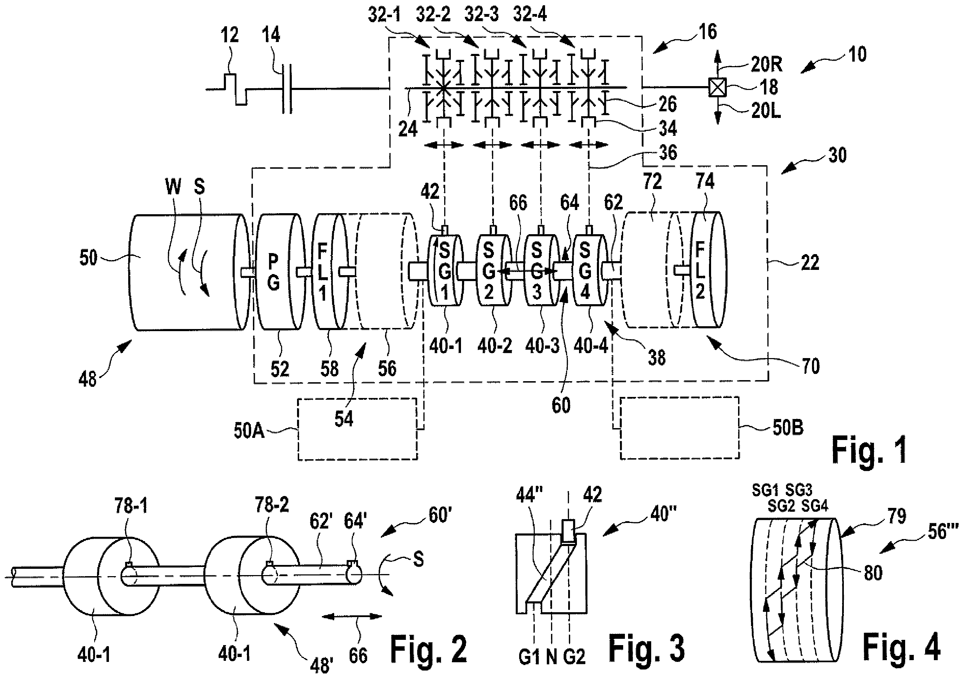

In Fig. 1 ist ein Antriebsstrang für ein Kraftfahrzeug schematisch dargestellt und generell mit 10 bezeichnet. Der Antriebsstrang 10 beinhaltet einen Antriebsmotor 12 wie einen Verbrennungsmotor oder einen Elektromotor. Ferner weist der Antriebsstrang 10 eine Kupplungsanordnung 14 auf, die als einfache Kupplung oder als Doppelkupplung ausgebildet sein kann. Ausgangsseitig ist an die Kupplungsanordnung 14 eine Getriebeanordnung 16 angeschlossen, die als einfaches Stufengetriebe in Vorgelegebauweise ausgebildet sein kann, oder als Doppelkupplungsgetriebe. Ein Ausgang der Getriebeanordnung 16 ist mit einem Differential 18 verbunden, mittels dessen Antriebsleistung auf angetriebene Räder 20L, 20R verteilbar ist.

Die Getriebeanordnung 16 weist ein Getriebegehäuse 22 auf, innerhalb dessen wenigstens eine Getriebewelle 24 drehbar gelagert ist, an der Zahnräder festgelegt sind (Festräder) oder Losräder 26 drehbar gelagert sind. Die Getriebewelle 24 kann eine Eingangswelle oder eine Ausgangswelle sein. Die Getriebeanordnung 16 kann weitere Wellen beinhalten, an denen Festräder festgelegt oder Losräder drehbar gelagert sind.

Zum Ein- und Auslegen von Gangstufen der Getriebeanordnung 16 ist eine Schaltanordnung 30 vorgesehen. Die Schaltanordnung 30 weist zum einen eine Mehrzahl von Schaltkupplungspaketen auf, die in Fig. 1 mit 32-1 bis 32-4 bezeichnet sind. Die Schaltkupplungspakete 32 können an sich herkömmlicher Bauart sein und beinhalten generell eine oder zwei Synchron-Schaltkupplungen, die zum Verbinden von jeweils einem Losrad mit der Getriebewelle 24 ausgelegt sind. Die Schaltkupplungspakete 32 beinhalten jeweils eine Schaltmuffe 34, um die ein oder zwei Schaltkupplungen zu öffnen und zu schließen. In die Schaltmuffen 34 greifen Schaltglieder 36, wie beispielsweise Schaltgabeln. In Fig. 1 sind schematisch vier Schaltkupplungspakete 32-1 bis 32-4 an einer Getriebewelle 24 dargestellt. Die vier Schaltkupplungspakete 32-1 bis 32-4 können zum Ein- und Auslegen von insgesamt acht Gangstufen dienen, beispielsweise sieben Vorwärtsgangstufen und eine Rückwärtsgangstufe. In Ausführungsformen, bei denen die Getriebeanordnung 16 zwei Teilgetriebe zur Bildung eines Doppelkupplungsgetriebes beinhaltet, können beispielsweise zwei Schaltkupplungspakete einem Teilgetriebe und die anderen zwei Schaltkupplungspakete dem anderen Teilgetriebe zugeordnet sein. Die Schaltkupplungspakete können an verschiedenen Wellen angeordnet sein und müssen nicht zwangsläufig an der gleichen Getriebewelle 24 oder Wellenanordnung angeordnet sein.

Die Schaltanordnung 30 weist ferner eine Schaltwalzenanordnung 38 auf. Die Schaltwalzenanordnung 38 beinhaltet vorliegend eine Mehrzahl von Schaltscheiben 40-1 bis 40-4, genauer vier Schaltscheiben, wobei jede Schaltscheibe 40 einem der Schaltkupplungspakete 32 zugeordnet ist. Genauer gesagt ist jedes Schaltglied 36 mit einem Mitnehmer 42 verbunden, der in eine Schaltkontur 44 der zugeordneten Schaltscheibe eingreift, wie es in Fig. 1 schematisch für die Schaltscheibe 40-1 dargestellt ist.

Die Schaltscheiben 40-1 bis 40-4 sind jeweils nach der Art einer Schaltwalze aufgebaut, weisen jedoch vorzugsweise jeweils nur eine Schaltkontur 44 auf, in die ein Mitnehmer 42 greift, der genau einem Schaltkupplungspaket 32 zugeordnet ist. Die Schaltscheiben 40 sind unabhängig voneinander verdrehbar. Beispielsweise können auf diese Weise in zwei Teilgetrieben eines Doppelkupplungsgetriebes gleichzeitig Gangstufen eingelegt sein.

Zum Verdrehen der Schaltscheiben 40, die sämtlich koaxial zueinander und axial nebeneinander angeordnet sind, dient eine Aktuatoranordnung 48. Die Aktuatoranordnung 48 weist einen Elektromotor 50 auf, der in einer Wählrichtung W und in einer entgegengesetzten Schaltrichtung S antreibbar ist. Es versteht sich, dass der Elektromotor mittels einer Steuereinrichtung angesteuert wird und beispielsweise weg- oder kraftgesteuert arbeiten kann.

Eine Motorwelle des Elektromotors 50 ist mit einem Eingangsglied eines Planetengetriebes 52 verbunden, über das die Drehzahl des Elektromotors herabgesetzt wird. Ein Ausgangsglied des Planetengetriebes 52 (oder in einer anderen Ausführungsform, wenn kein Planetengetriebe 52 vorhanden ist, direkt die Motorwelle des Elektromotors 50) ist mit einem Eingangsglied eines ersten Aktuatorgetriebes 54 verbunden. Das erste Aktuatorgetriebe 54 weist einen Wähl-Rotation-Translation-Wandler 56 auf, der nach der Art einer Schaltwalze ausgebildet sein kann, beispielsweise als Wählscheibe, wie nachstehend noch ausgeführt werden wird. Ferner weist das erste Aktuatorgetriebe 54 einen Wähl-Freilauf 58 auf. Der Wähl-Freilauf 58 verbindet das Planetengetriebe 52 und den Wähl-Rotation-Translation-Wandler 56. Ein Ausgangsglied des Wähl-Rotation-Translation-Wandlers 56 ist mit einer Ziehkeilanordnung 60 verbunden. Die Ziehkeilanordnung 60 beinhaltet eine Welle 62, an der ein Ziehkeil 64 festgelegt ist. Die Welle 62 ist in einer Translationsrichtung bewegbar, wie es bei 66 gezeigt ist. Der Umfang der Bewegbarkeit der Welle 62 ist so, dass der Ziehkeil 64 jeweils in axialer Ausrichtung gebracht werden kann mit den einander gegenüberliegenden Schaltscheiben 40 der Schaltwalzenanordnung 38, im vorliegenden Fall mit der Schaltscheibe 40-1 und auch der Schaltscheibe 40-4, und natürlich auch den dazwischenliegenden Schaltscheiben 40-2, 40-3.

Bei einem Antrieb des Elektromotors 50 in Wählrichtung W ist der Wähl-Freilauf 58 geschlossen, so dass der Wähl-Rotation-Translation-Wandler 56 angetrieben wird. Dies führt zu einer Translationsbewegung 66 der Ziehkeilanordnung 60.

Der Wähl-Rotation-Translation-Wandler 56 ist so ausgebildet, dass er bei fortgesetzter Drehung des Elektromotors 50 in Wählrichtung W eine oszillierende Bewegung der Ziehkeilanordnung 60 in Translationsrichtung hervorruft, bei der der Ziehkeil 64 zwischen den voneinander am weitesten entfernt liegenden Schaltscheiben 40-1, 40-4 hin und her bewegt wird.

Das Ausgangsglied des Planetengetriebes 52 (oder die Motorwelle des Elektromotors 50) ist ferner mit einem zweiten Aktuatorgetriebe 70 verbunden. Das zweite Aktuatorgetriebe 70 kann einen Schalt-Rotation-Rotation-Wandler beinhalten, und beinhaltet vorzugsweise einen Schalt-Freilauf 74.

Der Schalt-Rotation-Rotation-Wandler 72 ist zwischen einem Ausgangsglied des Schalt-Freilaufes 74 und der Welle 62 der Ziehkeilanordnung 60 angebunden, sofern vorhanden.

Sofern der Elektromotor 50 in der oben beschriebenen Wählrichtung W angetrieben wird, ist der Schalt-Freilauf 74 geöffnet, so dass ein Ausgangsglied hiervon nicht in Drehung gesetzt wird (allenfalls abgesehen von Schleppmomenten, die jedoch durch geeignete Bremsen unterdrückt werden können).

Wenn der Elektromotor 50 in der entgegengesetzten Schaltrichtung S angetrieben wird, ist der Schalt-Freilauf 74 geschlossen, so dass ein Ausgang des Schalt-Freilaufes 74 in Schaltrichtung S in Drehung versetzt wird und folglich auch entweder direkt die Welle 62 der Ziehkeilanordnung 60, oder aber ein Eingangsglied des Schalt-Rotation-Rotation-Wandlers 72. Der Schalt-Rotation-Rotation-Wandler 72 kann eine Drehbewegung des Ausgangsgliedes des Schalt-Freilaufes 74 hochsetzen oder heruntersetzen, also schneller als dieses Drehen oder langsamer, je nach Bedarf.

Die Betriebsweise der Schaltanordnung 30 der Fig. 1 ist folgendermaßen. Falls beispielsweise das Schaltkupplungspaket 32-2 zu betätigen ist, wird zunächst der Elektromotor 50 in Wählrichtung W angetrieben, bis der Ziehkeil 64 axial mit der Schaltscheibe 40-2 ausgerichtet ist, die dem Schaltkupplungspaket 32-2 zugeordnet ist. Anschließend wird die Drehrichtung des Elektromotors 50 umgekehrt, so dass dieser in Schaltrichtung S rotiert wird. Dies führt aufgrund des Schließens des Schalt-Freilaufes 74 dazu, dass die Welle 62 der Ziehkeilanordnung 60 gedreht wird und über den Ziehkeil 64 die Schaltscheibe 40-2 in Umfangsrichtung mitgenommen wird. Hierdurch wird das dem Schaltkupplungspaket 32-2 zugeordnete Schaltglied 36 axial bewegt, und zwar aufgrund des Eingriffs des damit verbundenen Mitnehmers 42 in eine Schaltkontur 44 der Schaltscheibe 40-2. Wenn eine Gangstufe mittels des Schaltkupplungspaketes 32-2 eingelegt ist, kann diese Gangstufe wieder ausgelegt werden, indem der Elektromotor 50 weiter in Schaltrichtung S angetrieben wird. Alternativ kann die Gangstufe eingelegt bleiben, und der Elektromotor 50 wird in Wählrichtung W gedreht, um eine andere Schaltscheibe anzuwählen und ein damit verbundenes Schaltkupplungspaket zu betätigen, beispielsweise zur Vorwahl in einem inaktiven Teilgetriebe eines Doppelkupplungsgetriebes.

Bei Wählbewegungen W ist der Wähl-Freilauf 58 geschlossen und über den Wähl-Rotation-Translation-Wandler 56 wird eine Translationsbewegung auf die Ziehkeilanordnung 60 aufgeprägt. Der Schalt-Freilauf 74 ist in der Wähl-Drehrichtung W geöffnet, so dass die Welle 62 nicht gedreht wird. Wenn der Elektromotor 50 in der Schaltrichtung S angetrieben wird, ist der Wähl-Freilauf 58 geöffnet, so dass die Welle 62 keine Translationsbewegung vollzieht. Der Schalt-Freilauf 74 ist geschlossen, so dass die Welle 62 in Schaltrichtung S gedreht wird.

In Fig. 2 ist in schematischer Weise eine weitere Ausführungsform einer Ziehkeilanordnung 60' gezeigt. Es ist zu erkennen, dass die Ziehkeilanordnung 60' eine Welle 62' aufweist, an der ein Mitnehmermerkmal in Form eines Ziehkeils 64' ausgebildet ist. Die Welle 62' durchsetzt nicht näher bezeichnete zentrische Bohrungen in den Schaltscheiben 40 (gezeigt sind der Einfachheit halber zwei Schaltscheiben 40-1 und 40-2). Die Bohrungen sind ferner mit Keilnuten 78-1 bzw. 78-2 ausgestattet, so dass der Ziehkeil 64' in axialer Richtung durch die Schaltscheiben 40 axial hindurchbewegt werden kann. Sobald er mit einer Schaltscheibe axial ausgerichtet ist, kann durch eine Schaltbewegung S eine Drehung der so angetriebenen Schaltscheibe eingeleitet werden.

Fig. 3 zeigt in schematischer Form eine Ausführungsform einer Schaltscheibe 40", die eine Schaltkontur 44" aufweist, in die ein Mitnehmer 42 greift. Die Schaltkontur 44' erstreckt sich in axialer Richtung über eine Länge, so dass mit einem zugeordneten Schaltkupplungspaket eine mittlere Neutralstellung N sowie zwei Gangstellungen G1 und G2 eingerichtet werden können. Die Schaltkontur 44" erstreckt sich vorzugsweise über 360° und ist in Umfangsrichtung umlaufend, so dass sich bei einer fortgesetzten Drehung der Schaltscheibe 40" der Mitnehmer 42 oszillationsartig zwischen den Gangstellungen G1 und G2 bewegt.

Auf diese Weise ist es möglich, dass bei nur einer Drehrichtung (der Schaltrichtung S) sämtliche Gangstufen ein- und ausgelegt werden können, die dem Schaltkupplungspaket zugeordnet sind, das wiederum dieser Schaltscheibe 40" zugeordnet ist.

Fig. 4 zeigt in ähnlicher schematischer Darstellung einen Wähl-Rotation-Translation-Wandler 56" in Form einer Wählscheibe 79, an der eine Wählkontur 80 ausgebildet ist. Die Wählkontur 80 kann am Außenumfang ausgebildet sein, kann jedoch auch an einem Innenumfang der mit einer Bohrung oder ähnlichem versehenen Wählscheibe 79 ausgebildet sein, obgleich dies in Fig. 4 nicht dargestellt ist.

Die Wählkontur 80 erstreckt sich über 360° und ist so ausgebildet, dass sie umlaufend ist, so dass ein Mitnehmerelement der Welle 62 der Ziehkeilanordnung 60 bei einer fortgesetzten Drehung der Wählscheibe 79 in Wählrichtung W oszillationsartig zwischen einer Position SG1 und einer Position SG4 hin und her bewegt wird, wobei diese Positionen den axial äußersten Schaltscheiben 40-1 und 40-4 entsprechen.

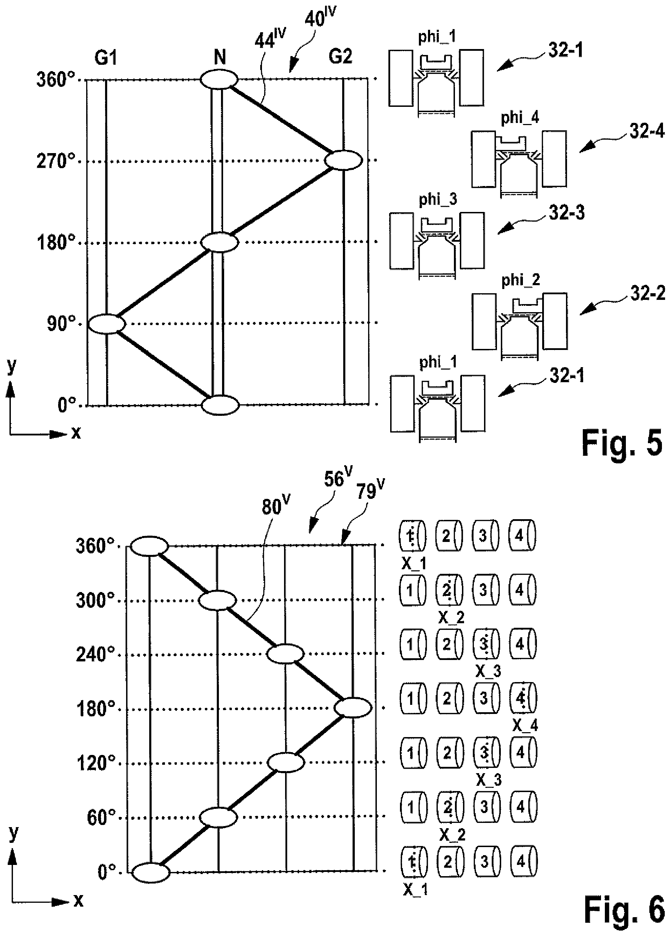

Fig. 5 zeigt in schematischer Form eine Abwicklung einer weiteren Ausführungsform einer Schaltscheibe 40^{IV} mit einer Schaltkontur 44^{IV}, die in der Abwicklung zickzackförmig verläuft, so dass ein in Fig. 5 nicht näher dargestellter Mitnehmer bei einer Drehung der Schaltscheibe 40^{IV} in axialer Richtung oszillierend bewegt wird, und zwar zwischen einer Neutralposition, von da aus zu einer Gangposition G2, von da aus wieder zur Neutralposition, von da aus zur Gangposition G1, von da wieder zur Neutralposition, und dann wieder, da die 360° damit abgeschlossen sind, in der gleichen Reihenfolge immer so weiter.

Auf diese Weise können sämtliche Gangstufen ein- und ausgelegt werden, die dem Schaltkupplungspaket zugeordnet sind, das der Schaltscheibe 40^{IV} zugeordnet ist. In Fig. 5 ist schematisch angedeutet, dass beispielsweise bei einem Schaltkupplungspaket 32^{Iv} eine Gangstufe eingelegt sein kann, wenn sich ein zugeordneter Mitnehmer einer zugeordneten Schaltscheibe in der Gangposition G2 befindet. Ferner ist gezeigt, dass bei einem Schaltkupplungspaket 32-2 eine axial entgegengesetzte Gangstufe eingelegt sein kann, wenn sich ein damit gekoppelter Mitnehmer in einer Position G1 einer Schaltscheibe befindet, die dem Schaltkupplungspaket 32-2 zugeordnet ist. Die anderen Schaltkupplungspakete befinden sich dann beispielsweise jeweils in einer Neutralposition N.

Fig. 6 zeigt eine schematische Darstellung einer Abwicklung eines Wähl-Rotation-Translation-Wandlers 56^{V} in Form einer Wählscheibe 79^{V}, die eine Wählkontur 80^{V} beinhaltet. Die Wählkontur 80^{V} erstreckt sich über 360° und ist in Umfangsrichtung umlaufend ausgebildet. Sofern ein Mitnehmer einer Welle 62 einer Ziehkeilanordnung 60 sich in einer Position bei 0° befindet, ist beispielsweise eine Schaltscheibe 40-1 angewählt, wie es in Fig. 6 bei X_1 angedeutet ist. In einer Position, bei der die Schaltkontur 80^{V} im Bereich von 60° und im Bereich von 300 eingerichtet ist, ist die zweite Schaltscheibe 40-2 ausgewählt (X_2). Bei 240° und bei 120° ist die dritte Schaltscheibe 40-3 ausgewählt (X_3), und schließlich ist bei 180° die vierte Schaltscheibe 40-4 ausgewählt (X_4).

Bei einer fortgesetzten Drehung der Wählscheibe 79 in Wählrichtung W wird die Welle 62 folglich oszillationsartig in Translationsrichtung versetzt, und zwar so, dass der Ziehkeil 64 oszillationsartig die Extrempositionen der ersten Schaltscheibe 40-1 und der letzten Schaltscheibe 40-4 einnimmt.

## Patentansprüche

1. Schaltanordnung (30) für ein Kraftfahrzeuggetriebe (16), das wenigstens zwei Schaltkupplungspakete (32) zum Ein- und Auslegen von Gangstufen (G1, G2, ...) aufweist, mit einer Schaltwalzenanordnung (38), die für jedes Schaltkupplungspaket (32) eine Schaltkontur (44) aufweist, die mit einem Mitnehmer (42) in Eingriff steht, der mit dem Schaltkupplungspaket (32) gekoppelt ist, und mit einer Aktuatoranordnung (48) zum Antreiben der Schaltwalzenanordnung (38), wobei die Schaltwalzenanordnung (38) wenigstens zwei Schaltscheiben (40) aufweist, die jeweils einem Schaltkupplungspaket (32) zugeordnet sind, wobei die Aktuatoranordnung (48) einen einzelnen Schaltmotor (50; 50A) zum Antreiben der wenigstens zwei Schaltscheiben (40) aufweist,
**dadurch gekennzeichnet, dass**
der einzelne Schaltmotor (50; 50A) über eine Wählanordnung mit den Schaltscheiben (40) gekoppelt ist, derart, dass der Schaltmotor (50; 50A) eine jeweils angewählte Schaltscheibe (40) verdrehen kann, um deren zugeordnetes Schaltkupplungspaket (32) zu betätigen.

2. Schaltanordnung nach Anspruch 1, **dadurch gekennzeichnet, dass** die Aktuatoranordnung (48) eine Ziehkeilanordnung (60) aufweist, die axial in Bezug auf die wenigstens zwei Schaltscheiben (40) bewegbar ist und/oder mit jeweils einer der wenigstens zwei Schaltscheiben (40) in einer Drehrichtung (S) koppelbar ist.

3. Schaltanordnung nach Anspruch 2, **dadurch gekennzeichnet, dass** die Ziehkeilanordnung (60) mittels eines Wählmotors (50; 50B) axial in Bezug auf die wenigstens zwei Schaltscheiben (40) bewegbar ist.

4. Schaltanordnung nach Anspruch 3, **dadurch gekennzeichnet, dass** der Wählmotor (50) ein in Drehrichtung antreibender Motor ist, der über einen Wähl-Rotation-Translation-Wandler (56) mit der Ziehkeilanordnung (60) gekoppelt ist.

5. Schaltanordnung nach Anspruch 4, **dadurch gekennzeichnet, dass** der Wähl-Rotation-Translation-Wandler (56) eine Wählscheibe (79) mit einer Wählkontur (80) ist.

6. Schaltanordnung nach Anspruch 5, **dadurch gekennzeichnet, dass** die Wählkontur (80) sich über 360° erstreckt.

7. Schaltanordnung nach einem der Ansprüche 3-6, **dadurch gekennzeichnet, dass** der Wählmotor (50) über einen Wähl-Freilauf (58) mit dem Wähl-Rotation-Translation-Wandler (56) gekoppelt ist.

8. Schaltanordnung nach einem der Ansprüche 2 - 7, **dadurch gekennzeichnet, dass** der Schaltmotor (50) ein in Drehrichtung antreibender Motor ist, der mit der Ziehkeilanordnung (60) gekoppelt ist.

9. Schaltanordnung nach Anspruch 8, **dadurch gekennzeichnet, dass** der Schaltmotor (50) über einen Schalt-Freilauf (74) mit der Ziehkeilanordnung (60) gekoppelt ist.

10. Schaltanordnung nach einem der Ansprüche 3-9, **dadurch gekennzeichnet, dass** der Schaltmotor (50) und der Wählmotor (50) durch einen einzigen Motor (50) gebildet sind.

11. Verfahren zum Durchführen eines Gangstufenwechsels in einem Kraftfahrzeuggetriebe (16) unter Verwendung einer Schaltanordnung (30) nach einem der Ansprüche 1 bis 10, mit den Schritten, eine von wenigstens zwei Schaltscheiben (40) anzuwählen und anschließend die angewählte Schaltscheibe (40) verdrehen.

## Claims

1. Shift arrangement (30) for a motor vehicle transmission (16) which has at least two shift clutch assemblies (32) for the engagement and disengagement of gear ratio stages (G1, G2,...), having a shift drum arrangement (38) which, for each shift clutch assembly (32), has a shift contour (44) which engages with a driver (42) which is coupled to the shift clutch assembly (32), and having an actuator arrangement (48) for driving the shift drum arrangement (38), wherein the shift drum arrangement (38) has at least two shift discs (40) which are assigned to in each case one shift clutch assembly (32), wherein the actuator arrangement (48) has a single shift motor (50; 50A) for driving the at least two shift discs (40), **characterized in that** the single shift motor (50; 50A) is coupled to the shift discs (40) by means of a selector arrangement, in such a way that the shift motor (50; 50A) can rotate a respectively selected shift disc (40) in order to actuate the associated shift clutch assembly (32) thereof.

2. Shift arrangement according to Claim 1, **characterized in that** the actuator arrangement (48) has a draw-key arrangement (60) which is movable axially in relation to the at least two shift discs (40) and/or is couplable to in each case one of the at least two shift discs (40) in a direction of rotation (S).

3. Shift arrangement according to Claim 2, **characterized in that** the draw-key arrangement (60) is movable axially in relation to the at least two shift discs (40) by means of a selector motor (50; 50B).

4. Shift arrangement according to Claim 3, **characterized in that** the selector motor (50) is a motor which drives in a direction of rotation and which is coupled to the draw-key arrangement (60) by means of a selector rotation-translation converter (56).

5. Shift arrangement according to Claim 4, **characterized in that** the selector rotation-translation converter (56) is a selector disc (79) with a selector contour (80).

6. Shift arrangement according to Claim 5, **characterized in that** the selector contour (80) extends over 360°.

7. Shift arrangement according to one of Claims 3 to 6, **characterized in that** the selector motor (50) is coupled to the selector rotation-translation converter (56) by means of a selector freewheel (58).

8. Shift arrangement according to one of Claims 2 to 7, **characterized in that** the shift motor (50) is a motor which drives in a direction of rotation and which is coupled to the draw-key arrangement (60).

9. Shift arrangement according to Claim 8, **characterized in that** the shift motor (50) is coupled to the draw-key arrangement (60) by means of a shift freewheel (74).

10. Shift arrangement according to one of Claims 3 to 9, **characterized in that** the shift motor (50) and the selector motor (50) are formed by a single motor (50).

11. Method for performing a gear ratio stage change in a motor vehicle transmission (16) using a shift arrangement (30) according to one of Claims 1 to 10, having the steps of selecting one of at least two shift discs (40) and subsequently rotating the selected shift disc (40).

## Revendications

1. Système de changement de vitesse (30) pour une boîte de vitesses de véhicule automobile (16) comportant au moins deux paquets d'embrayage de changement de vitesse (32) pour mettre et retirer des rapports de vitesse (G1, G2,...), avec un agencement à cylindre de changement de vitesse (38) comportant pour chaque paquet d'embrayage de changement de vitesse (32) un contour de changement de vitesse (44) en prise avec un doigt d'entraînement (42) couplé au paquet d'embrayage de changement de vitesse (32) et avec un agencement d'actionneur (48) pour entraîner l'agencement à cylindre de changement de vitesse (38) ;
l'agencement à cylindre de changement de vitesse (38) comportant au moins deux disques de changement de vitesse (40) respectivement associés à un paquet d'embrayage de changement de vitesse (32), l'agencement d'actionneur (48) comportant un moteur de changement de vitesse (50 ; 50A) individuel pour entraîner les au moins deux disques de changement de vitesse (40) ;
**caractérisé en ce que** le moteur de changement de vitesse (50 ; 50A) individuel est couplé, via un agencement de sélection, aux disques de changement de vitesse (40), de telle sorte que le moteur de changement de vitesse (50 ; 50A) puisse faire tourner un disque de changement de vitesse (40) respectivement sélectionné pour actionner son paquet d'embrayage de changement de vitesse (32) associé.

2. Système de changement de vitesse selon la revendication 1, **caractérisé en ce que** l'agencement d'actionneur (48) comporte un agencement de clavette mobile (60) mobile dans le plan axial par rapport aux au moins deux disques de changement de vitesse (40) et/ou pouvant être couplé à respectivement un des au moins deux disques de changement de vitesse (40) dans une direction de rotation (S).

3. Système de changement de vitesse selon la revendication 2, **caractérisé en ce que** l'agencement de clavette mobile (60) peut être déplacé dans le plan axial par rapport aux au moins deux disques de changement de vitesse (40) à l'aide d'un moteur de sélection (50 ; 50B).

4. Système de changement de vitesse selon la revendication 3, **caractérisé en ce que** le moteur de sélection (50) est un moteur effectuant l'entraînement dans la direction de rotation et couplé à l'agencement de clavette mobile (60) via un convertisseur de rotation-translation-sélection (56).

5. Système de changement de vitesse selon la revendication 4, **caractérisé en ce que** le convertisseur de rotation-translation-sélection (56) est un disque de sélection (79) avec un contour de sélection (80).

6. Système de changement de vitesse selon la revendication 5, **caractérisé en ce que** le contour de sélection (80) s'étend sur 360°.

7. Système de changement de vitesse selon l'une quelconque des revendications 3 à 6, **caractérisé en ce que** le moteur de sélection (50) est couplé à un convertisseur de rotation-translation-sélection (56) via une roue libre de sélection (58).

8. Système de changement de vitesse selon l'une quelconque des revendications 2 à 7, **caractérisé en ce que** le moteur de changement de vitesse (50) est un moteur effectuant un entraînement dans la direction de rotation et couplé à l'agencement de clavette mobile (60).

9. Système de changement de vitesse selon la revendication 8, **caractérisé en ce que** le moteur de changement de vitesse (50) est couplé à l'agencement de clavette mobile (60) via une roue libre de changement de vitesse (74).

10. Système de changement de vitesse selon l'une quelconque des revendications 3 à 9, **caractérisé en ce que** le moteur de changement de vitesse (50) et le moteur de sélection (50) sont formés par un seul moteur (50).

11. Procédé de réalisation d'un changement de rapport de vitesse dans une boîte de vitesses de véhicule automobile (16) en utilisant un système de changement de vitesse (30) selon l'une quelconque des revendications 1 à 10, avec les étapes de sélection d'un des au moins deux disques de changement de vitesse (40) puis de rotation du disque de changement de vitesse (40) sélectionné.
